# EUROPÄISCHE PATENTSCHRIFT

(11) **EP 1 639 690 B1**
(45) Veröffentlichungstag und Bekanntmachung des Hinweises auf die Patenterteilung: **17.01.2007**
(21) Anmeldenummer: 04740431.4
(22) Anmeldetag: 29.06.2004
(51) Int. Cl.: H02K 41/03

(54) **PLANARER DIREKTANTRIEB MIT EINEM POSITIONSMESSSYSTEM**
PLANAR DIRECT DRIVE UNIT COMPRISING A POSITION MEASURING SYSTEM
MECANISME D'ENTRAINEMENT DIRECT PLAN COMPRENANT UN SYSTEME DE MESURE DE POSITION

(30) Priorität: 02.07.2003 DE 10329931; 08.12.2003 DE 10357585
(43) Veröffentlichungstag der Anmeldung: 29.03.2006
(73) Patentinhaber: INA-Drives & Mechatronics GmbH & Co oHG, 98527 Suhl (DE)
(72) Erfinder: KEGELER, Jörg, 98553 Schleusingen (DE)
(74) Vertreter: Engel, Christoph Klaus
(86) Internationale Anmeldenummer: PCT/EP2004/007042
(87) Internationale Veröffentlichungsnummer: WO 2005/004313

(56) Entgegenhaltungen:
- DE-A- 19 531 520
- US-A- 5 126 648

## Beschreibung

Die vorliegende Erfindung betrifft einen planaren Direktantrieb (auch Planarmotor genannt), welcher ein Positionsmesssystem zur Steuerung der Fahrbewegungen des Läufers umfasst. Derartige Direktantriebe besitzen eine Passiveinheit mit einer planen Lauffläche, in welche Magnetflussbereiche integriert sind. Diese Passiveinheit bildet den Stator des Motors. Außerdem ist mindestens eine Aktiveinheit (Läufer) mit Spulenkörpern zur Erzeugung eines veränderlichen Magnetflusses vorgesehen, welche sich auf der Lauffläche der Passiveinheit bewegen kann. Darüber hinaus umfasst der Direktantrieb eine Lagereinheit, die reibungsarme zweidimensionale Bewegungen zwischen Aktiv- und Passiveinheit ermöglicht.

Aus der DE 195 13 325 A1 ist beispielsweise eine Hallsensorwegmesseinrichtung für den Einsatz in Linear- und Planarantrieben bekannt. Dazu sind mehrere Hallsensoren in der Aktiveinheit integriert, welche die aufgrund der Relativbewegung zwischen Aktiv- und Passiveinheit auftretenden Magnetfeldänderungen erfassen. Die Zahnteilung auf der Lauffläche der Passiveinheit bildet dazu die Maßverkörperung, welche durch die Sensoren abgetastet wird. Dadurch ist aber auch die Positioniergenauigkeit des Planarantriebs begrenzt, die direkt von der Zahnteilung und deren Genauigkeit abhängt. Durch die Anwendung dieser bekannten Positionsmessverfahren lassen sich Positionierungsgenauigkeiten im Bereich von 20-40 µm erzielen. Ein weiteres Problem besteht darin, dass die Positioniergenauigkeit auch von den Umgebungsbedingungen, insbesondere den Temperaturen der Passiveinheit abhängig ist. Die Lauffläche der Passiveinheit besteht zu einem großen Teil aus metallischen Materialien (insbesondere Weicheisenmaterial), die einen relativ großen Temperaturkoeffizienten haben. Aufgrund der Änderung der Umgebungstemperatur und auch aufgrund einer betriebsbedingten Eigenerwärmung kommt es zu einem nicht unerheblichen Ausdehnungsverhalten der Lauffläche, so dass die Maßverkörperung selbst eine in Bezug zur gewünschten Positioniergenauigkeit wesentliche Längenausdehnung erfährt. Wenn derartige Direktantriebe für Positionierungsaufgaben mit hohen Genauigkeitsanforderungen eingesetzt werden sollen, sind solche Fehler nicht mehr tolerierbar. Die weitere Miniaturisierung in vielen Technikbereichen erfordert vielmehr eine erhöhte Positioniergenauigkeit, die mit bisher bekannten integrierten Positionsmesssystemen nicht erreichbar ist.

Höhere Messgenauigkeiten können beispielsweise erzielt werden, wenn externe Messsysteme, beispielsweise unter Verwendung von Laserinterferometern oder Glasmaßstäben eingesetzt werden. Dazu müssen jedoch entweder große und schwere Wegmessnormale durch die Aktiveinheit mitgeführt werden oder es ist eine Ankopplung an externe Maßverkörperungen erforderlich. Eine solche Gestaltung ist insbesondere bei Planarantrieben problematisch, da die Aktiveinheiten auf einer größeren Lauffläche zweidimensional beliebig verfahrbar sein sollen. Auch der Einsatz optischer Messmethoden ist in der Praxis nur beschränkt möglich, da der Strahlengang von Messstrahlen häufig durch andere Elemente (beispielsweise weitere auf der Lauffläche bewegliche Aktiveinheiten, Kabel u.ä.) gestört werden würde.

Aus der DE 202 10 305 U1 ist in diesem Zusammenhang ein Positioniertisch eines Hochgeschwindigkeitslinearmotors bekannt, bei welchem ein Lagemesssystem zum Einsatz kommt, welches aus einem am Primärteil befestigten Lesekopf und einem auf den Läufer aufgebrachten Messstreifen besteht. Problematisch ist dabei, dass der Lagerspalt vergrößert werden muss, um den Messstreifen bei der Bewegung nicht zu beschädigen. Dadurch verringert sich die maximale Antriebskraft drastisch. Außerdem ist der Lesekopf an einer bestimmten Stelle des Primärteils fest angeordnet, so dass nur im Bereich des aufgeklebten Messstreifens eine exakte Lagebestimmung möglich ist. Außerhalb des vom Messstreifen erfassten Bewegungsbereichs steht das Lagemesssystem nicht zur Verfügung.

Die DE 195 31 520 A beschreibt eine Vorrichtung zum Positionieren und Fixieren von Körpern, wobei auf einem Stator mehrere unabhängig voneinander programmgesteuert verfahrbare Läufer angeordnet sind. Ein Distanzmesssystem zur Bestimmung der Positionen der Läufer relativ zueinander ist vorgesehen, über dessen Aufbau ist der Druckschrift nichts zu entnehmen.

Die US 5,126,648 beschreibt ein zweischrittiges Positionierungssystem mit Grob- und Feinpositionierung an planaren Antrieben. Hier wird jeweils eine Sensoranordnung verwendet, bei der die Maßverkörperung innerhalb des Lagerspaltes und auf der jeweiligen Passiveinheit vorgesehen ist.

Die Aufgabe der vorliegenden Erfindung besteht somit darin, einen verbesserten planaren Direktantrieb bereit zu stellen, der ein Positionsmesssystem umfasst, welches eine höhere Positioniergenauigkeit als die bisher bekannten integrierten Positionsmesssysteme besitzt und gleichzeitig die Nachteile von externen Positionsmesssystemen vermeidet. Insbesondere soll es durch die Erfindung möglich werden, die Aktiveinheit des Direktantriebs mit hoher Genauigkeit in Bezug auf vorgegebene Fixpunkte auf der Passiveinheit zu positionieren. Dabei sollen auch Bauformen der Aktiveinheit angegeben werden, welche eine einfache und genaue Positionierung einer bewegten Komponente gestatten. Schließlich besteht eine Teilaufgabe darin, eine einfache Montagemöglichkeit für eine quasistationäre Komponente bereit zu stellen, die im Zusammenspiel mit der Aktiveinheit neben der hohen Positioniergenauigkeit auch eine weitgehende Standardisierung verschiedener Werkzeugträger bzw. Werkstückhalter ermöglicht. Diese und weitere Aufgaben werden durch die vorliegende Erfindung wie im Anspruch 1 definiert erfüllt, bei welcher das Positionsmesssystem aus einer bewegten Komponente und einer quasistationären Komponente zusammengesetzt ist, von denen eine durch eine Maßverkörperung und die andere durch einen Messsensor gebildet ist.

Die quasistationäre Komponente ist dabei an einem vorbestimmten Fixpunkt außerhalb des Lagerspalts und im wesentlichen parallel zur Lauffläche, jedoch vertikal beabstandet von dieser angeordnet. Da die quasistationäre Komponente, welche beispielsweise die Maßverkörperung sein kann, auch nicht in die Lauffläche oder den Lagerspalt integriert werden muss, hat sie keine verschlechternden Auswirkungen auf die Antriebskraft, die durch den Magnetfluss erzeugt wird. Außerdem ist die quasistationäre Komponente vor Beschädigungen besser geschützt als wenn sie beispielsweise auf die Lauffläche aufgebracht werden würde.

Die Erfindung zeichnet sich weiterhin dadurch aus, dass die bewegte Komponente so an der Aktiveinheit angeordnet ist, dass sie bei Erreichen der quasistationären Komponente mit dieser in Messeingriff gelangt. Bei der Verwendung optischer oder magnetischer Messkomponenten ist ein mechanischer Messeingriff nicht erforderlich. Für die Funktion des Positionsmesssystems ist es ausreichend, wenn die beiden Komponenten nahe genug beieinander positioniert sind. Solange dieser funktionale Messeingriff besteht, wird die Aktiveinheit unter Auswertung des vom Messsensor gelieferten Positionssignals gesteuert bzw. geregelt. Dafür können bekannte Steuer- bzw. Regelsysteme eingesetzt werden. Innerhalb einer vorgegebenen Messfläche ist dadurch eine sehr genaue Positionierung der Aktiveinheit möglich. Diese durch die als Komponente des Positionsmesssystems wirkende Maßverkörperung definierte Messfläche wird dazu in den Bereichen platziert bzw. in diese Bereich als Bestandteil der Aktiveinheit verfahren, in denen die Positionierung mit hoher Genauigkeit erfolgen muss. Außerhalb dieser Bereiche kann die Aktiveinheit mit einer geringeren Genauigkeit positioniert werden, wobei vorzugsweise auf ein Globalmesssystem zurück gegriffen wird oder der Direktantrieb in herkömmlicher Weise im Schrittbetrieb arbeitet.

Gemäß einer ersten Ausführungsform der Erfindung ist die quasistationäre Komponente des Positionsmesssystems an einem angepassten Gestellelement befestigt, welches mit der Passiveinheit verbunden ist, so dass eine dauerhaft fixierte Lage der quasistationären Komponente erzielt wird. Es ist möglich, mehrere Gestellelemente mit quasistationären Komponenten an bestimmten Fixpunkten auf der Lauffläche der Passiveinheit anzuordnen. Bei diesen Gestellelementen kann es sich beispielsweise um Werkzeugmodule zur Ausführung unterschiedlicher Arbeitsaufgaben handeln. Die Aktiveinheit kann zwischen diesen Fixpunkten bzw. Werkzeugmodulen beliebig verfahren werden, wobei jeweils in der Nähe dieser fixierten Messpunkte auf das hochgenaue Positionsmesssystem zurück gegriffen werden kann.

Bei einer zweiten Ausführungsform ist die quasistationäre Komponente in ein Fixmodul integriert, dessen Position in der Ebene der Passiveinheit durch mindestens ein an der Passiveinheit befestigtes mechanisches Fixierungsmittel festgelegt ist, und das mindestens ein Haltemagnet in das Fixmodul integriert ist, welcher das Fixmodul auf der Lauffläche der Passiveinheit festhält. Die mechanischen Fixierungsmittel können vorzugsweise als Fixierstifte ausgebildet sein, so dass das Fixmodul ohne spezielle Werkzeuge an der vorgesehenen Position auf die Lauffläche der Passiveinheit aufgesetzt werden kann und dort durch die Fixierstifte bereits in der Ebene der Lauffläche mit hoher Genauigkeit angeordnet ist. Um während des Betriebs ein Verrutschen des Fixmoduls zu vermeiden und entsprechende Kräfte aufnehmen zu können, stellt der Haltemagnet eine stabile Verbindung zur Passiveinheit her.

Bei einer nochmals abgewandelten Ausführungsform ist die quasistationäre Komponente nicht starr mit der Passiveinheit verbunden, sondern an einer zweiten Aktiveinheit befestigt, welche relativ zur Passiveinheit und relativ zur ersten Aktiveinheit beweglich ist. Für bestimmte Aufgaben ist es ausreichend, wenn die relative Lage zwischen mehreren beweglichen Aktiveinheiten mit hoher Genauigkeit bestimmt werden kann. Auf die absolute Position der Aktiveinheiten auf der Lauffläche der Passiveinheit kommt es dabei nicht bzw. nicht mit derselben Genauigkeit an. Auch in diesen Fällen ist es ausreichend, wenn das Positionsmesssystem entsprechende Positionssignale liefert, solange die Aktiveinheiten zur Ausführung vorgegebener Aufgaben in unmittelbarer Nähe zueinander bewegt werden müssen. In diesem Zusammenhang ist zu erwähnen, dass die Wiederholgenauigkeit von Direktantrieben auch bei Nutzung herkömmlicher Globalpositionsmesssysteme oder im Schrittbetrieb wesentlich höher ist als die Positioniergenauigkeit, die nur bei etwa 30-40 µm liegt. Auf der Lauffläche lassen sich daher Fixpunkte definieren, die mit hoher Genauigkeit, nämlich einer Wiederholgenauigkeit von etwa 2-3 µm, von der zweiten Aktiveinheit (welche die quasistationäre Komponente trägt) angefahren werden können. Bezogen auf diesen Fixpunkt kann dann innerhalb der o.g. Messfläche die hohe Positioniergenauigkeit das beschriebenen integrierten Positionsmesssystems genutzt werden.

Es ist besonders vorteilhaft, wenn die bewegliche Komponente des Positionsmesssystems vertikal versetzt zu den Spulensystemen der Aktiveinheit in einem von außen zugänglichen Bereich angeordnet ist. Die Aktiveinheit besitzt dazu einen mehrschichtigen Aufbau, so dass die bewegliche Komponente und der Zugang zu dieser eine optimale Gestaltung der eigentlichen Antriebselemente nicht behindern. Dieser mehrschichtige Aufbau kann noch dadurch erweitert werden, dass wiederum vertikal versetzt zu der beweglichen Komponente ein Werkstückhalter angebracht ist, der an die jeweilige Aufgabe des Direktantriebs bzw. an das zu bewegende Werkstück/Werkzeug angepasst ist. Diese Gestaltung hat außerdem den Vorteil, dass die Maßverkörperung bzw. der Messsensor in unmittelbarer Nähe des zu positionierenden Werkstücks/Werkzeugs befestigt ist, wodurch sich Verkippungsmessfehler deutlich reduzieren lassen. Die Positionsmessung erfolgt in unmittelbarer Nähe des Werkstücks, dessen Position von primärem Interesse ist. Messfehler höherer Ordnung wirken sich somit auf das Messergebnis nur sehr wenig aus.

Die Entkopplung der Aktiveinheit vom Positionsmesssystem sowie die gleichzeitige Verbindung der bewegten Komponente mit dem Werkstückhalter ermöglichen auch modulare Lösungen, bei denen eine Aktiveinheit unterschiedliche Werkstückhalter transportieren kann, die jeweils ihre eigene, angepasste bewegte Komponente des Positionsmesssystems mit sich führen.

Vorteilhafterweise kommt als Maßverkörperung eine Kreuzgitterplatte zum Einsatz, während als Messsensor insbesondere optische oder magnetische Sensoren geeignet sind. Ebenso können Gitterfolien als Maßverkörperung genutzt werden.

Vorzugsweise besitzt die Aktiveinheit einen zu ihrer Lauffläche parallel angeordneten Halterrahmen, in welchem die Trägerplatte auswechselbar positioniert ist. Die bewegte Komponente des Positionsmesssystems ist dabei in einer Ebene angeordnet, die zwischen den Spulensystemen der Aktiveinheit und der Trägerplatte liegt. Vorzugsweise befindet sich die bewegte Komponente an der Unterseite der Trägerplatte. Durch diese Gestaltung der Aktiveinheit ist es möglich, den Parallelversatz zwischen der Maßverkörperung und der Lauffläche sehr gering zu halten, z.B. kleiner als 50µm. Die Genauigkeit des Positionsmesssystems wird dadurch erhöht.

Bei einer weitergebildeten Ausführungsform ist die Trägerplatte im Halterahmen über spezielle Ausrichtmittel befestigt, um auch beim Wechsel der Trägerplatte eine hohe Wiederholgenauigkeit sicherstellen zu können. Diese Ausrichtmittel werden beispielsweise durch Permanentmagnete im Halterahmen und den Permanentmagneten gegenüberliegende Eisenstifte in der Trägerplatte gebildet. Die resultierenden Magnetkräfte der Ausrichtmittel bestimmen die Lage der Trägerplatte im Halterahmen eindeutig, wenn die Ausrichtmittel beispielsweise nach dem Dreipunktprinzip angeordnet sind. Die Ausrichtmittel können aber auch durch mit einer Federkraft belastete Druckkugeln und kommunizierende Vertiefungen oder andere geeignete Systeme gebildet sein.

Es ist daran zu erinnern, dass durch die erfindungsgemäße Verwendung des erläuterten Positionsmesssystems bei planaren Direktantrieben eine höhere Genauigkeit als beispielsweise bei der Anwendung von Hallsensormesssystemen bzw. bei der Steuerung der Direktantriebe im Mikroschrittbetrieb möglich wird. Auch gegenüber der teilweise angewendeten Positionsbestimmung durch eine kameragestützte Bildauswertung besitzt das hier verwendete Messsystem erhebliche Vorteile, da wesentlich weniger Daten verarbeitet werden müssen und somit eine schnellere Regelung des Direktantriebs erfolgen kann.

Wesentlich für die Erfindung ist weiterhin, dass die Passiveinheit selbst bzw. die darauf ausgebildete Lauffläche nicht mehr in die Messkette integriert ist. Dadurch entfallen auch die sonst erforderlichen Justagearbeiten.

Schließlich gestattet die hier vorgestellte Kopplung zwischen Direktantrieb und Positionsmesssystem eine deutliche Kostenreduzierung, da zum Aufbau des Positionsmesssystems handelsübliche Komponenten verwendet werden können, wobei die Maßverkörperung wesentlich kleiner als die insgesamt zur Verfügung stehende Lauffläche ausgelegt werden kann.

Für die Bewegung der Aktiveinheiten zwischen den einzelnen Fixpunkten kann weiterhin ein herkömmliches Globalmesssystem genutzt werden, da für diese Bewegungen keine hohen Genauigkeitsanforderungen bestehen. Ebenso ist zwischen den Fixpunkten ein Schrittbetrieb des Antriebs möglich, wobei die höheren Wiederholgenauigkeiten gegenüber einer absoluten Genauigkeit bei der Bewegung entlang einer vorgegebene Strecke genutzt werden können.

Weitere Vorteile, Einzelheiten und Weiterbildungen ergeben sich aus der nachfolgenden Beschreibung bevorzugter Ausführungsformen, unter Bezugnahme auf die Zeichnung. Es zeigen:
- Fig. 1: eine vereinfachte Seitenansicht eines erfindungsgemäßen planaren Direktantriebs, welcher eine Passiveinheit und zwei Aktiveinheiten umfasst;
- Fig. 2: eine prinzipielle Darstellung einer Fabrikationseinheit mit mehreren Arbeitsmodulen unter Anwendung des erfindungsgemäßen Direktantriebs in einer Ansicht von oben;
- Fig. 3: eine vereinfachte seitliche Übersichtsdarstellung einer abgewandelten Ausführungsform des planaren Direktantriebs mit Positionsmesssystem;
- Fig. 4: eine seitliche, teilweise geschnittene Detaildarstellung eines auf der Passiveinheit des Direktantriebs nach Fig. 3 angeordneten Fixmoduls, wobei das Positionsmesssystem im Messeingriff gezeichnet ist;
- Fig. 5: eine Grundplatte des Fixmoduls nach Fig. 4 in einer Ansicht von unten;
- Fig. 6: eine Seitenansicht der Aktiveinheit des in Fig. 3 gezeigten Direktantriebs;
- Fig. 7: einen Halterahmen der Aktiveinheit nach Fig. 6 in einer Ansicht von oben;
- Fig. 8: eine Trägerplatte der Aktiveinheit nach Fig. 6 in einer Seitenansicht.

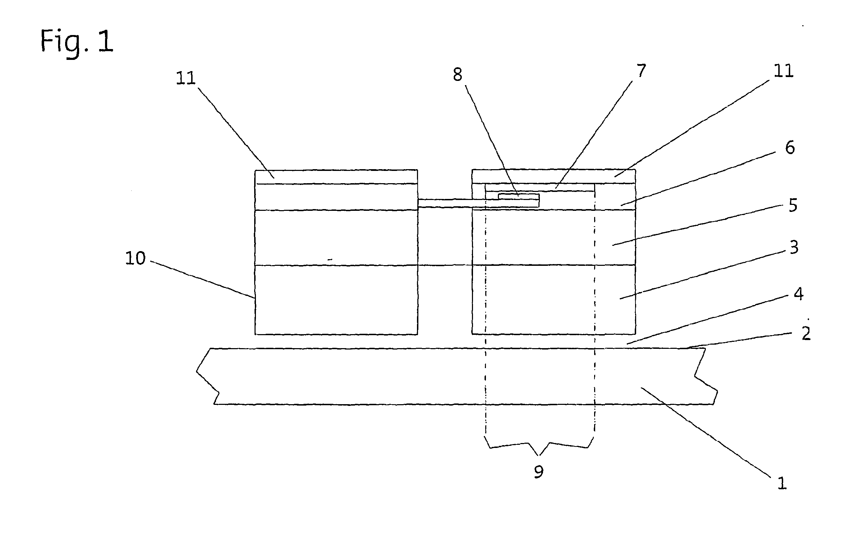

Der in Fig. 1 gezeigte planare Direktantrieb umfasst eine Passiveinheit 1, die an ihrer Oberseite eine Lauffläche 2 besitzt. Auf der Lauffläche 2 ist beispielsweise eine kreuzweise verlaufende Zahnteilung ausgebildet, die aus magnetisierbaren Zähnen und nicht-magnetisierbaren Zahnlücken besteht. Der generelle Aufbau solcher Direktantriebe ist dem Fachmann bekannt, so dass auf eine detaillierte Beschreibung der Funktionsweise dieses Planarmotors verzichtet werden kann.

Der Direktantrieb besitzt außerdem eine erste Aktiveinheit 3, die bei geeigneter Bestromung in mindestens zwei Bewegungsrichtigungen auf der Lauffläche 2 verfahren werden kann. Um trotz der magnetischen Anziehungskräfte zwischen der Aktiveinheit 3 und der Passiveinheit 1 eine Bewegung zu ermöglichen, ist eine Lagereinheit erforderlich, durch welche ein Lagerspalt 4 während des Betriebs des Direktantriebs aufrechterhalten wird. Vorzugsweise eignen sich dafür Luftlager (nicht gezeigt), die zwischen der Lauffläche 2 und der Aktiveinheit 3 einen Luftspalt erzeugen.

Hinsichtlich des Schwingungs- und Beschleunigungsverhaltens ist es vorteilhaft, die relativ schweren Spulensysteme, einschließlich der Eisenkerne und ggf. Permanentmagnete (nicht gezeigt) im unteren Bereich (Ebene I) der Aktiveinheit anzuordnen, also möglichst nah an der Lauffläche 2, in deren Ebene die Antriebskräfte erzeugt werden. In einem darüber liegenden mittleren Bereich (Ebene II) der Aktiveinheit können Hilfselemente 5, wie beispielsweise die benötigten elektronischen Schaltungen und Anschlusselemente für die Energieversorgung vorgesehen sein. In einer dritten Ebene (Ebene III) der Aktiveinheit 3 ist ein Messkomponentenraum 6 vorgesehen. Innerhalb des Messkomponentenraums 6 befindet sich bei der ersten Aktiveinheit 3 eine bewegte Komponente 7 eines Positionsmesssystems. Im dargestellten Beispiel handelt es sich bei der bewegten Komponente 7 um ein Kreuzgitter, welches als Maßverkörperung dient. Sofern das Positionsmesssystem Lageveränderungen nur in einer Richtung überwachen soll, kann das Kreuzgitter beispielsweise durch einen Glasmaßstab ersetzt sein. Die bewegte Komponente 7 ist zwar gegenüber der ersten Aktiveinheit 3 fixiert, wird jedoch mit der Aktiveinheit gegenüber der Passiveinheit bewegt.

Damit das Positionsmesssystems ein auswertbares Positionssignal generieren kann, ist eine zweite Komponente erforderlich, die hier als quasistationäre Komponente 8 bezeichnet wird. In der in Fig. 1 dargestellten Ausführungsform ist die quasistationäre Komponente 8 ein Messsensor, der gegenüber der bewegten Komponente 7 als stationär angesehen wird. Sofern die bewegte Komponente 7 in den Erfassungsbereich des Messsensors 8 gelangt, kann von diesem ein Positionssignal in Abhängigkeit von der Bewegung der ersten Aktiveinheit 3 erzeugt werden. Der lokale Messbereich, in welchem das Positionsmesssystem zur Positionsbestimmung genutzt werden kann, ist durch eine Messfläche 9 bestimmt, die im dargestellten Beispiel im wesentlichen der Fläche des Kreuzgitters 7 entspricht. Genauer gesehen wird die Messfläche 9 durch den Bereich bestimmt, in welchem die beiden Komponenten 7, 8 des Positionsmesssystems in funktionalem Messeingriff stehen, also ein auswertbares Positionssignal liefern.

Für den Fachmann wird es offensichtlich sein, dass die Messgenauigkeit des hier beschriebenen Positionsmesssystems bei Verwendung einer hochgenauen Maßverkörperung und eines geeigneten Messsensors wesentlich höher ist, als dies beispielsweise durch die Abtastung der als Maßverkörperung wirkenden Zähne der Lauffläche 2 erreichbar wäre.

Bei abgewandelten Ausführungsformen lässt sich auch eine "Kopf-über-Anordnung" wählen.

Bei der in der Fig. 1 dargestellten Ausführungsform ist die quasistationäre Komponente 8 an einer zweiten Aktiveinheit 10 befestigt, die ihrerseits auf der Passiveinheit 1 bewegt werden kann. Die zweite Aktiveinheit 10 ist beispielsweise in vergleichbarer Weise wie die erste Aktiveinheit 3 aufgebaut.

In dieser Anwendung dient das Positionsmesssystem somit der Bestimmung der relativen Lage zwischen der ersten Aktiveinheit 3 und der zweiten Aktiveinheit 10. Um eine genaue Position einzunehmen, kann die zweite Aktiveinheit 10 beispielsweise an einen festgelegten Fixpunkt gefahren werden, welcher während einer vorangegangenen Kalibrierung des Direktantriebs exakt bestimmt wurde. Wie oben bereits erläutert wurde, ist die Wiederholgenauigkeit beim Wiederanfahren des Fixpunktes recht groß. Die erste Aktiveinheit 3 wird anschließend in die Nähe der zweiten Aktiveinheit 10 gefahren, bis die beiden Komponenten 7, 8 des Positionsmesssystems in Messeingriff gelangen. Die weitere Positionssteuerung der bewegten Aktiveinheit erfolgt dann unter Auswertung des vom Positionsmesssystem gelieferten Positionssignals, so dass eine hochgenaue Positionierung der ersten Aktiveinheit 3 gegenüber der zweiten Aktiveinheit 10 bzw. dem zugrunde liegenden Fixpunkt erfolgen kann. Dabei ist es natürlich möglich, mehrere Fixpunkte auf der Passiveinheit vorzusehen, um dadurch letztlich mehrere Messflächen 9 im Bereich der Lauffläche zu definieren.

Die in Fig. 1 dargestellten Aktiveinheiten 3, 10 besitzen noch eine vierte Funktionsebene (Ebene IV), die oberhalb der jeweiligen Komponenten des Positionsmesssystems angeordnet sein kann. Dabei handelt es sich um jeweils einen Werkstückhalter 11. Der Werkstückhalter 11 trägt je nach Anwendungsfall ein entsprechendes Werkstück oder ein benötigtes Werkzeug. Der Werkstückhalter 11 kann lösbar mit der eigentlichen Aktiveinheit verbunden sein, um bei wechselnden Aufgaben ausgewechselt zu werden. Dabei ist es zweckmäßig, wenn die jeweiligen Komponenten 7, 8 des Positionsmesssystems mit dem Werkstückhalter 11 verbunden und mit diesem ausgewechselt werden. Auf diese Weise kann jedem Werkstückhalter eine gewünschte Maßverkörperung zugeordnet werden, die an die jeweilige Genauigkeitsanforderung angepasst ist. Die gemessene Position ist damit an den Werkstückträger und nicht an die Aktiveinheit gekoppelt. Nach dem Wechseln des Werkstückträgers ist somit keine neue Kalibrierung des Messsystems erforderlich.

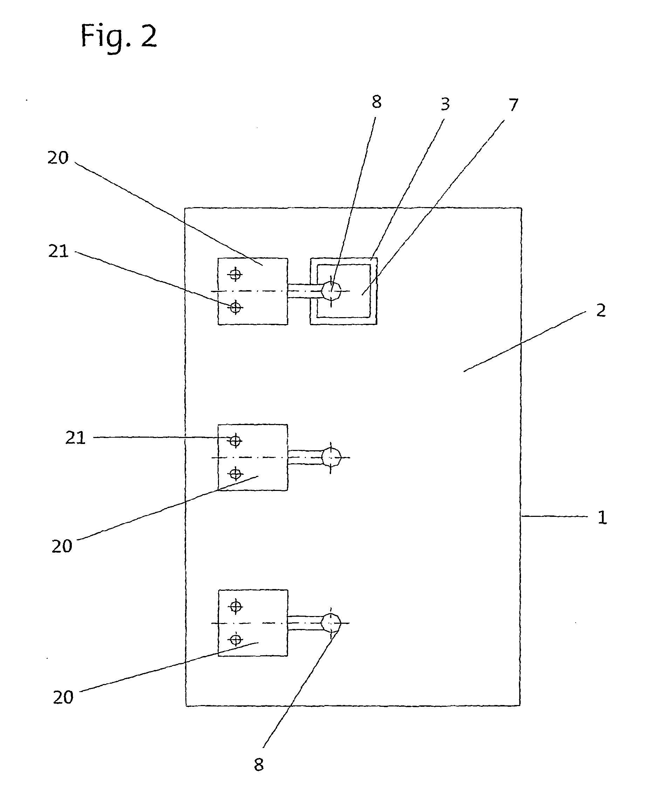

In Fig. 2 ist einer Ansicht von oben eine vereinfacht dargestellte Fabrikationseinheit mit mehreren Arbeitsmodulen 20 gezeigt, wobei eine abgewandelte Ausführungsform des erfindungsgemäßen Direktantriebs eingesetzt wird. Mehrere quasistationäre Komponenten 8 sind dabei über ein Gestellelement bzw. die Arbeitsmodule 20 fest mit der Passiveinheit 1 verbunden. Es ist erkennbar, dass auf der Passiveinheit mehrere Arbeitsmodule 20 positioniert werden können. Im dargestellten Beispiel werden drei Arbeitsmodule 20 und eine bewegliche Aktiveinheit 3 genutzt. Die Lage der Arbeitsmodule 20 wird beispielsweise über Montagestifte 21 vorgegeben. Damit sind auch die Fixpunkte für die quasistationären Komponenten 8 bestimmt. In vielen Fällen wird es auf die absolute Position der jeweiligen quasistationären Komponente 8 gegenüber der Passiveinheit 1 nicht oder nicht mit hoher Genauigkeit ankommen, da für die Positionierungsaufgaben die exakte Bestimmung der Lage zwischen der quasistationären Komponente 8, die beispielsweise die Position eines Greifers markieren könnte, gegenüber der bewegten Komponente 7, welche die aktuelle Position der beweglichen Aktiveinheit 3 wiedergibt, ankommt.

Die bewegliche Aktiveinheit 3 kann während eines Fertigungsprozesses das jeweils gewünschte Arbeitsmodul 20 anfahren. Die bewegte Komponente 7 wird immer mit bewegt, so dass an jedem Arbeitsmodul eine Positionierung mit hoher Genauigkeit erfolgen kann. Bei abgewandelten Ausführungsformen könnten auch mehrere beweglich Aktiveinheiten auf der Lauffläche 2 der Passiveinheit 1 angeordnet sein nach neuer Fig. 2

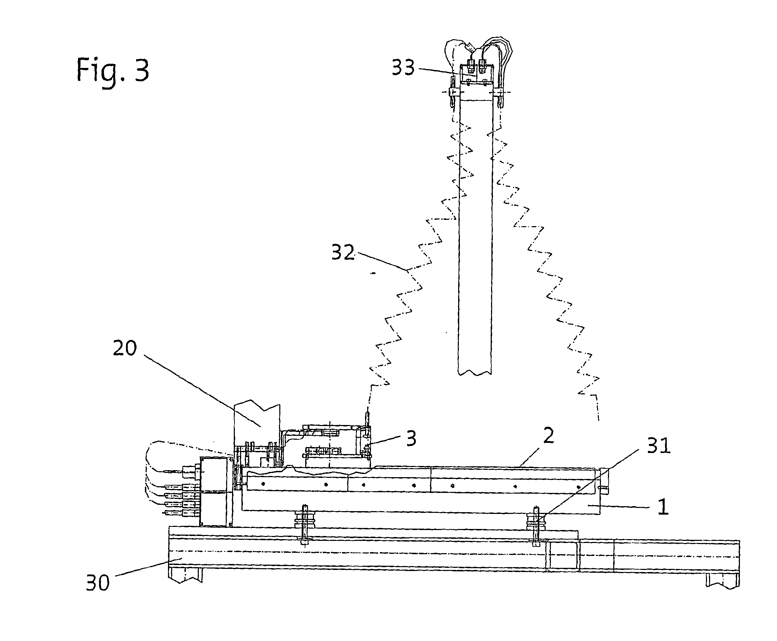

In Fig. 3 ist eine abgewandelte Ausführungsform des planaren Direktantriebs in einer seitlichen Übersichtsdarstellung gezeigt. Die Passiveinheit 1 ruht hier auf einem Gestell 30, wobei geeignete Niveauregler 31 verwendet werden, um die Lauffläche der Passiveinheit 1 exakt waagerecht einstellen zu können. Der Direktantrieb besitzt in dieser Ausführung nur eine einzige Aktiveinheit 3, welche auf der Lauffläche 2 der Passiveinheit 1 beweglich ist. Bei abgewandelten Ausführungsformen können auch mehrere Aktiveinheiten vorhanden sein, wie dies oben beschrieben ist.

Schließlich ist/sind mindestens ein, üblicherweise mehrere Arbeitsmodule 20 am Rand der Passiveinheit angeordnet, die hier als Fixmodule bezeichnet werden. Die Versorgung der beweglichen Aktiveinheit 3 erfolgt über flexible Anschlussleitungen 32, die beispielsweise von einer sich über die Passiveinheit erstreckenden Versorgungsbrücke 33 ausgehen.

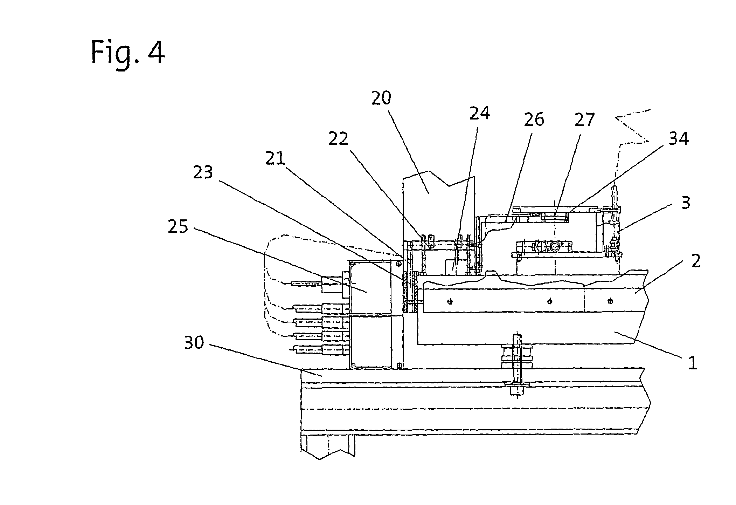

In Fig. 4 sind das Fixmodul 20 und die Aktiveinheit 3 in einer seitlich, teilweise geschnittenen Detaildarstellung gezeigt. Das Fixmodul 20 besitzt eine Grundplatte 22, welche über Montagestifte 21 an einer gestellfesten Anschlagleiste 23 befestigt wird. Die Verbindung zwischen Grundplatte, Montagestiften und Anschlagleiste ist mit hoher Passgenauigkeit ausgeführt, die einerseits einen einfachen Wechsel der Fixmodule ermöglicht und andererseits die Lage des Fixmoduls in der Ebene der Lauffläche 2 der Passiveinheit 1 mit recht hoher Genauigkeit vorgibt. Die Grundplatte 22 kann bezüglich ihrer Abmessungen standardisiert werden und mit unterschiedlichen Aufbauten bestückt werden, so dass Fixmodule verschiedenster Art bereitgestellt werden können, die hinsichtlich der Abmessungen kompatibel sind. An einer Anschlagleiste lassen sich mehrere Fixmodule anordnen, die bei veränderten Bearbeitungsaufgaben durch andere Fixmodule ausgetauscht werden können.

Um das Fixmodul 20 ohne spezielles Werkzeug auf der Passiveinheit zu befestigen, ist in der Grundplatte 22 mindestens ein Haltemagnet 24 angeordnet, der das gesamte Fixmodul auf die Lauffläche 2 der Passiveinheit 1 zieht, so dass eine dauerhafte Position eingenommen wird, die auch bei der Ausführung von Bearbeitungsvorgängen eingehalten wird.

Am Rand der Passiveinheit 1 ist in unmittelbarer Nähe der Anschlagleiste 23 oder als integraler Bestandteil dieser Anschlagleiste ein Anschlusskasten 25 vorgesehen, über welchen die Versorgung der einzelnen Fixmodule mit der Betriebsspannung, elektronischen Steuersignalen, Hydraulik bzw. Pneumatik oder ähnlichen Medien erfolgen kann. Vorzugsweise sind leicht lösbare Steckverbindungen zwischen den Fixmodulen und dem Anschlusskasten 25 vorgesehen, die einen schnellen Versorgungsanschluss ermöglichen und die Flexibilität beim Austausch der Fixmodule erhalten.

Am Fixmodul 20 ist weiterhin ein Sensorarm 26 befestigt, an dessen über das Fixmodul hinausragenden Ende ein Messsensor 27 angeordnet ist. Der Messsensor 27 bildet im Positionsmesssystem die quasistationäre Komponente. Bei nahe genug an das Fixmodul 20 herangefahrener Aktiveinheit 3 gelangt der Messsensor 27 in Messeingriff mit einer als bewegte Komponente des Messsystems fungierenden Maßverkörperung 34, die an der Aktiveinheit 3 befestigt ist.

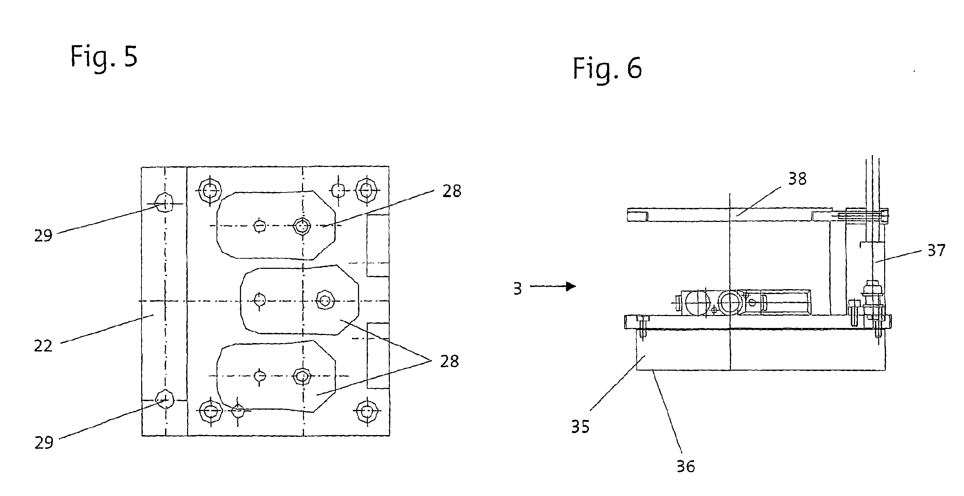

Fig. 5 zeigt die Grundplatte 22 des zuvor beschriebenen Fixmoduls 20 in einer Ansicht von unten. Bei der hier dargestellten Ausführungsform sind in der Bodenfläche der Grundplatte drei Aussparungen 28 eingebracht, in welche je nach Bedarf bis zu drei Elektromagnete eingesetzt werden können, die als Haltemagnete 24 arbeiten. Bei einem erforderlichen Wechsel des Fixmoduls 20 werden die Elektromagnete von der Stromversorgung getrennt, so dass das Fixmodul leicht von der Passiveinheit abgenommen werden kann. Weiterhin sind im hinteren Bereich der Grundplatte 22 zwei Bohrungen 29 angebracht, in welche im Betriebszustand die Montagestifte 21 eingreifen.

Fig. 6 zeigt eine Seitenansicht der in Bezug auf Fig. 4 näher erläuterten Aktiveinheit 3. In einem Antriebsblock 35 sind die Spulensysteme (nicht gezeigt) angeordnet, die für die Erzeugung der Antriebskräfte benötigt werden. An der Unterseite des Antriebsblocks 35 befindet sich eine Aktivlauffläche 36, die in bekannter Weise mit der Lauffläche 2 der Passiveinheit 1 zusammenwirkt, um den Direktantrieb zu realisieren. An einer Seite des Antriebsblocks 35 ist ein Distanzblock 37 befestigt, der einen Halterahmen 38 trägt. Der Halterahmen ist vorzugsweise aus einem nichtmagnetisierbaren Material hergestellt und erstreckt sich parallel zur Aktivlauffläche 36.

Um später eine hohe Messgenauigkeit erzielen zu können, wird der Halterahmen 38 nach seiner Befestigung an der Aktiveinheit 3 nochmals einer Feinbearbeitung unterzogen, damit die Oberseite des Halterahmens 38 soweit wie möglich parallel zur Aktivlauffläche 36 verläuft. Da während des Betriebs des Direktantriebs eine hohe Parallelität zwischen der Aktivlauffläche 36 und der Lauffläche 2 der Passiveinheit 1 besteht (insbesondere bei Verwendung eines Luftlagers), ist der Halterahmen 38 auch mit der Passiveinheit sehr genau ausgerichtet. Durch die Anordnung des Fixmoduls 20 auf der Passiveinheit ist auch dieses mit hoher Genauigkeit zur Passiveinheit ausgerichtet, so dass beim Messeingriff zwischen dem Messsensor 27 und der Maßverkörperung 34 (siehe Fig. 4) eine hohe Parallelität zwischen Sensor und Maßverkörperung besteht, wodurch der aus einem Parallelversatz resultierende Fehler gering wird.

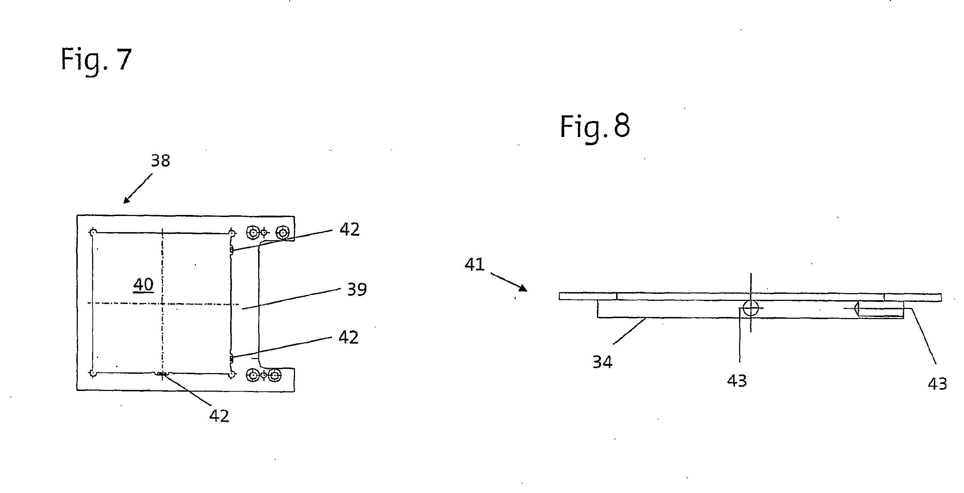

Fig. 7 zeigt den Halterahmen 38 in einer Ansicht von oben. Der Halterahmen besitzt einen Auflageabschnitt 39, welcher bei der Montage auf dem Distanzblock 37 aufliegt und an diesem verschraubt werden kann. Weiterhin ist eine zentrale Rahmenaussparung 40 vorgesehen, in welche eine Trägerplatte 41 (siehe Fig. 8) einsetzbar ist. Um die Trägerplatte in der Rahmenaussparung 40 schnell und ohne das Erfordernis einer Feinjustage ausrichten zu können, sind bei der dargestellten Ausführungsform an drei Positionen im Halterahmen 38 Permanentmagnete 42 angeordnet. Diese wirken mit magnetisierbaren Ausrichtstiften 43 zusammen, welche an der Trägerplatte 41 angebracht sind.

Fig. 8 zeigt die Trägerplatte 41 in einer Seitenansicht. Die Trägerplatte besteht vorzugsweise aus einem nicht magnetisierbaren Material und ist im Übrigen an den speziellen Einsatzzweck angepasst. Die Abmessungen der Trägerplatte werden vorzugsweise standardisiert, wobei als Trägerplatte beispielsweise ein Werkstückträger gemäß DIN 32561-T4 verwendet wird. Auf diese Weise ist es möglich, von verschiedenen Herstellern Werkstück- oder Werkzeugträger konfektionieren zu lassen, da lediglich die Abmessungen der Trägerplatte standardmäßig ausgelegt werden müssen, um auf einem erfindungsgemäßen planaren Direktantrieb eingesetzt werden zu können. Die möglichen Aufbauten, die sich auf der Oberseite der Trägerplatte 41 errichten lassen, sind auf diese Weise sehr vielfältig.

Verständlicherweise ist der Halterahmen 38 in seinen Abmessungen so ausgelegt, dass er die Trägerplatte 41 optimal aufnehmen kann. Wie aus Fig. 8 ersichtlich ist, sind in der Trägerplatte die Ausrichtstifte 43 angeordnet, die eine kraftschlüssige Verbindung zum Halterahmen herstellen. Die Maßverkörperung 34, die gemeinsam mit dem Messsensor das Positionsmesssystem bildet, ist vorzugsweise auf der Unterseite der Trägerplatte 41 angebracht. Als Maßverkörperung kommt beispielsweise ein Kreuzgitterglasmaßstab in Frage, der an der Unterseite der Trägerplatte angeklebt ist.

Es soll daran erinnert werden, dass auf der Passiveinheit mehrere Aktiveinheiten gleichzeitig verfahren werden können. Ebenso können mehrere Fixmodule in den Randbereichen oder auch in anderen speziell dafür vorgesehenen Bereichen der Passiveinheit angeordnet werden. Für den Fachmann wird auch ohne weiteres verständlich sein, dass bei nochmals abgewandelten Ausführungsformen auch die Maßverkörperung die quasistationäre Komponente bilden kann, während der Messsensor als bewegliche Komponente mit der Aktiveinheit verbunden ist.

Weitere Abwandlungen und Ausgestaltungen der vorliegenden Erfindung sind im Rahmen des durch die Patentansprüche definierten Schutzbereiches möglich.

### Bezugszeichenliste

- 1: Passiveinheit
- 2: Lauffläche
- 3: erste Aktiveinheit
- 4: Lagerspalt
- 5: Hilfselemente
- 6: Messkomponentenraum
- 7: bewegte Komponente
- 8: quasistationäre Komponente
- 9: Messfläche
- 10: zweite Aktiveinheit
- 11: Werkstückhalter
- 20: Arbeitsmodul/Fixmodul
- 21: Montagestifte
- 22: Grundplatte
- 23: Anschlagleiste
- 24: Haltemagnete
- 25: Anschlusskasten
- 26: Sensorarm
- 27: Messsensor
- 28: Aussparung
- 29: Bohrung
- 30: Gestell
- 31: Niveauregler
- 32: Flexible Anschlussleitungen
- 33: Versorgungsbrücke
- 34: Maßverkörperung
- 35: Antriebsblock
- 36: Aktivlauffläche
- 37: Distanzblock
- 38: Halterahmen
- 39: Auflageabschnitt
- 40: Rahmenaussparung
- 41: Trägerplatte
- 42: Permanentmagnete
- 43: Ausrichtstifte

## Patentansprüche

1. Planarer Direktantrieb mit
• einer Passiveinheit (1), die eine plane Lauffläche (2) mit Magnetflussbereichen umfasst;
• einer Aktiveinheit (3) mit Spulenkörpern zur Erzeugung eines veränderlichen Magnetflusses;
• einer Lagereinheit, die unter Aufrechterhaltung eines Lagerspalts (4) eine reibungsarme zweidimensionale Bewegung zwischen Aktiv- und Passiveinheit gestattet;
• einem Positionsmesssystem, welches eine Maßverkörperung und einen die Maßverkörperung abtastenden und ein Positionssignal liefernden Messsensor umfasst;
**dadurch gekennzeichnet, dass**
• das Positionsmesssystem aus einer bewegten Komponente (7) und einer quasistationären Komponente (8) besteht, von denen die eine durch die Maßverkörperung und die andere durch den Messsensor gebildet ist, wobei beide Komponenten außerhalb des Lagerspalts (4) und beabstandet zur Lauffläche (2) angeordnet sind;
• die quasistationäre Komponente (8) an einem vorbestimmten Fixpunkt im wesentlichen parallel versetzt zur Lauffläche (2) angeordnet ist;
• die bewegte Komponente (7) so an der Aktiveinheit (3) befestigt ist, dass sie bei Erreichen der quasistationären Komponente (8) mit dieser in Messeingriff gelangt;
• die Positionssteuerung der Aktiveinheit (3) unter Auswertung des vom Messsensor gelieferten Positionssignals gesteuert oder geregelt wird, solange die beiden Komponenten (7, 8) des Positionsmesssystems in Messeingriff stehen.

2. Planarer Direktantrieb nach Anspruch 1, **dadurch gekennzeichnet, dass** die quasistationäre Komponente (8) außerhalb des von den Spulenkörpern der Aktiveinheit (3) benötigten Bewegungsraums vertikal versetzt zur Lauffläche (2) angeordnet ist.

3. Planarer Direktantrieb nach Anspruch 1 oder 2, **dadurch gekennzeichnet, dass** die quasistationäre Komponente (8) an Gestellelementen befestigt ist und gegenüber der Passiveinheit (1) eine dauerhaft fixierte Lage besitzt.

4. Planarer Direktantrieb nach Anspruch 1 oder 2, **dadurch gekennzeichnet, dass** die quasistationäre Komponente (8) an einer zweiten Aktiveinheit (10) befestigt ist, die relativ zur Passiveinheit (1) und relativ zur ersten Aktiveinheit (3) beweglich und an die vorbestimmten Fixpunkte verfahrbar ist.

5. Planarer Direktantrieb nach Anspruch 1 oder 2, **dadurch gekennzeichnet, dass** die quasistationäre Komponente (8) in ein Fixmodul (20) integriert ist, dessen Position in der Ebene der Passiveinheit (1) durch mindestens ein an der Passiveinheit (1) befestigtes mechanisches Fixierungsmittel (21, 23) festgelegt ist, und dass weiterhin mindestens ein Haltemagnet (24) in das Fixmodul (20) integriert ist, welcher das Fixmodul auf der Lauffläche (2) der Passiveinheit (1) festhält.

6. Planarer Direktantrieb nach Anspruch 5, **dadurch gekennzeichnet, dass** das mechanische Fixierungsmittel eine gestellfeste Anschlagleiste (23) am Rand der Passiveinheit (1) und mehrere in die Anschlagleiste (23) und das Fixmodul (20) eingreifende Fixierstifte (21) umfasst, und dass der Haltemagnet (24) einen oder mehrere Elektromagnete umfasst.

7. Planarer Direktantrieb nach einem der Ansprüche 1 bis 6, **dadurch gekennzeichnet, dass** mehrere quasistationäre Komponenten (8) an mehreren voneinander beabstandeten Fixpunkten angeordnet sind.

8. Planarer Direktantrieb nach Anspruch 7, **dadurch gekennzeichnet, dass** die Fixpunkte durch mehrere Fixmodule (20) gebildet sind, die auf der Passiveinheit (1) befestigt sind.

9. Planarer Direktantrieb nach einem der Ansprüche 1 bis 8, **dadurch gekennzeichnet, dass** er mehrere auf der gemeinsamen Passiveinheit (1) bewegliche Aktiveinheiten (3, 10) umfasst, die jeweils eine bewegte (7) und/oder eine quasistationäre Komponente (8) umfassen.

10. Planarer Direktantrieb nach einem der Ansprüche 1 bis 9, **dadurch gekennzeichnet, dass** die bewegte Komponente (7) vertikal versetzt zu den Spulensystemen der Aktiveinheit (3) in einem von außen zugänglichen Bereich angeordnet ist.

11. Planarer Direktantrieb nach Anspruch 10, **dadurch gekennzeichnet, dass** die bewegte Komponente (7) vertikal versetzt zu einem auf die Aktiveinheit (3) aufgesetztem Werkstückhalter (11) befestigt ist.

12. Planarer Direktantrieb nach Anspruch 11, **dadurch gekennzeichnet, dass** die bewegte Komponente (7) mit dem Werkstückhalter (11) eine konstruktive Einheit bildet, welche auswechselbar mit der Aktiveinheit (3) verbunden ist.

13. Planarer Direktantrieb nach einem der Ansprüche 1 bis 12, **dadurch gekennzeichnet, dass** die Aktiveinheit (3) einen zu ihrer Aktivlauffläche (36) parallel angeordneten Halterahmen (38) besitzt, in welchem eine Trägerplatte (41) auswechselbar positioniert ist, wobei die bewegte Komponente (7) in einer Ebene zwischen den Spulensystemen der Aktiveinheit (3) und der Trägerplatte (41) angeordnet ist.

14. Planarer Direktantrieb nach Anspruch 13, **dadurch gekennzeichnet, dass** die bewegte Komponente (7) durch eine flächige Maßverkörperung (34) gebildet ist, die an der Unterseite der Trägerplatte (41) befestigt ist.

15. Planarer Direktantrieb nach Anspruch 14, **dadurch gekennzeichnet, dass** die Maßverkörperung (34) eine Kreuzgitterplatte ist, deren Parallelversatz zur Aktivlauffläche (36) der Aktiveinheit (3) kleiner als 50µm ist.

16. Planarer Direktantrieb nach einem der Ansprüche 13 bis 15, **dadurch gekennzeichnet, dass** im Halterahmen (38) und in der Trägerplatte (41) Ausrichtmittel (42, 43) vorhanden sind, die durch magnetische Anziehungskräfte zusammenwirken, um die Trägerplatte (41) in einer vorbestimmten Lage im Halterahmen (38) zu positionieren.

17. Planarer Direktantrieb nach Anspruch 16, **dadurch gekennzeichnet, dass** die Ausrichtmittel durch mehrere Permanentmagnete (42) und gegenüberliegende magnetisierbare Ausrichtstifte (43) gebildet sind, die jeweils im Halterahmen bzw. in der Trägerplatte eingesetzt sind.

18. Planarer Direktantrieb nach einem der Ansprüche 1 bis 17, **dadurch gekennzeichnet, dass** als Messsensor ein optischer oder magnetoresistiver Sensor dient.

19. Planarer Direktantrieb nach einem der Ansprüche 1 bis 18, **dadurch gekennzeichnet, dass** es weiterhin ein Globalmesssystem umfasst, mit dessen Hilfe die Bewegung der Aktiveinheit (3, 10) gesteuert wird, solange die beiden Komponenten (7, 8) des Positionsmesssystems nicht im Messeingriff sind.

20. Planarer Direktantrieb nach einem der Ansprüche 1 bis 19, **dadurch gekennzeichnet, dass** die Bewegung der Aktiveinheit (3, 10) im Schrittbetrieb erfolgt, solange die beiden Komponenten (7, 8) des Positionsmesssystems nicht im Messeingriff sind.

21. Planarer Direktantrieb nach einem der Ansprüche 1 bis 20, **dadurch gekennzeichnet, dass** die Lagereinheit durch Luftlager gebildet ist.

## Claims

1. Planar direct drive unit with
• a passive unit (1), which comprises a planar running surface (2) with magnetic flux areas;
• an active unit (3) with coil bodies for generating a variable magnetic flux;
• a bearing unit, which by maintaining a bearing gap (4) permits a low-friction two dimensional movement between the active and passive unit;
• a position measuring system which comprises a dimensional standard and a measuring sensor which scans the dimensional standard and supplies a position signal;
**characterised in that**
• the position measuring system comprises a moved component (7) and a quasi-stationary component (8), one of which is in the form of the dimensional standard and the other is in the form of the measuring sensor, whereby both components are arranged outside the bearing gap (4) and at a distance from the running surface (2);
• the quasi-stationary component (8) is arranged at a prespecified fixed point offset essentially parallel to the running surface (2);
• the moved component (7) is secured to the active unit (3) so that on reaching the quasi-stationary component (8) it comes into measurement engagement therewith;
• the position control of the active unit (3) is driven or controlled by evaluation of the position signal supplied by the measuring sensor, as long as the two components (7, 8) of the position measuring system are in measurement engagement.

2. Planar direct drive according to claim 1, **characterised in that** the quasi-stationary component (8) is arranged outside the movement space required by the coil bodies of the active unit (3) vertically offset to the running surface (2).

3. Planar direct drive according to claim 1 or 2, **characterised in that** the quasi-stationary component (8) is secured to frame elements and is in a permanently fixed position relative to the passive unit (1).

4. Planar direct drive according to claim 1 or 2, **characterised in that** the quasi-stationary component (8) is secured to a second active unit (10) which is moveable relative to the passive unit (1) and relative to the first active unit (3) and can be moved to the presepcified fixed points.

5. Planar direct drive according to claim 1 or 2, **characterised in that** the quasi-stationary component (8) is integrated into a fixed module (20) the position of which is determined in the plane of the passive unit (1) by at least one mechanical fixing means (21, 23) secured to the passive unit (1), and **in that** furthermore at least one holding magnet (24) is integrated into the fixed module (20) which secures the fixed module on the running surface (2) of the passive unit (1).

6. Planar direct drive according to claim 5, **characterised in that** the mechanical fixing means comprises a frame secure stop bar (23) on the edge of the passive unit (1) and several fixing pins (21) engaging in the stop bar (23) and the fixed module (20), and **in that** the holding magnet (24) comprises one or more electric magnets.

7. Planar direct drive according to one of claims 1 to 6, **characterised in that** several quasi-stationary components (8) are arranged at several spaced apart fixed points.

8. Planar direct drive according to claim 7, **characterised in that** the fixed points are formed by several fixed modules (20) which are secured to the passive unit (1).

9. Planar direct drive according to one of claims 1 to 8, **characterised in that** it comprises several active units (3, 10) moveable on the common passive unit (1) which comprise receptively a moved (7) and/or a quasi-stationary component (8).

10. Planar direct drive according to one of claims 1 to 9, **characterised in that** the moved component (7) is arranged vertically offset to the coil systems of the active unit (3) in an area accessible from the exterior.

11. Planar direct drive according to claim 10, **characterised in that** the moved component (7) is secured vertically offset to a workpiece holder (11) fitted onto the active unit (3).

12. Planar direct drive according to claim 11, **characterised in that** the moved component (7) forms a structural unit with the workpiece holder (11) which is connected replaceably with the active unit (3).

13. Planar direct drive according to one of claims 1 to 12, **characterised in that** the active unit (3) has a holder frame (38) arranged parallel to its active running surface (36) in which a carrier plate (41) is positioned replaceably, whereby the moved component (7) is arranged in a plane between the coil systems of the active unit (3) and the carrier plate (41).

14. Planar direct drive according to claims 13, **characterised in that** the moved component (7) is formed by a flat dimension standard (34) which is secured to the underside of the carrier plate (41).

15. Planar direct drive according to claim 14, **characterised in that** the measurement standard (34) is a cross grid plate, of which the parallel offset to the active running surface (36) of the active unit (3) is less than 50 µm.

16. Planar direct drive according to one of claims 13 to 15, **characterised in that** in the holder frame (38) and in the carrier plate (41) orientation means (42, 43) are provided which interact by magnetic attraction forces to position the carrier plate (41) in a prespecified position in the holder frame (38).

17. Planar direct drive according to claim 16, **characterised in that** the orientation means are formed by several permanent magnets (42) and opposite-lying magnetisable orientation pins (43) which are inserted respectively in the holder frame or in the carrier plate.

18. Planar direct drive according to one of claims 1 to 17, **characterised in that** an optical or magnetoresistant sensor is used as the measuring sensor.

19. Planar direct drive according to one of claims 1 to 18, **characterised in that** it also comprises a global measuring system by means of which the movement of the active unit (3, 10) is controlled as a long as the two components (7, 8) of the position measuring system are not in measurement engagement.

20. Planar direct drive according to one of claims 1 to 19, **characterised in that** the movement of the active unit (3, 10) is carried out in stepping operation as long as the two components (7, 8) of the position measuring system are not in measurement engagement.

21. Planar direct drive according to one of claims 1 to 20, **characterised in that** the bearing unit is formed by air bearing.

## Revendications

1. Entraînement direct planaire comprenant :
- une unité passive (1) comprenant une surface de roulement plane (2) avec des zones de flux magnétique ;
- une unité active (3) avec des corps de bobine pour générer un flux magnétique variable ;
- une unité de palier qui permet un mouvement bidimensionnel sans friction entre les unités active et passive tout en maintenant un jeu de palier (4) ;
- un système de mesure de position qui comprend une mesure matérialisée et un capteur de mesure balayant la mesure matérialisée et délivrant un signal de position ;
**caractérisé en ce que**
- le système de mesure de position est composé d'un composant mobile (7) et d'un composant quasi-stationnaire (8), dont l'un est la mesure matérialisée et l'autre le capteur de mesure, les deux composants étant logés à l'extérieur du jeu de palier (4) et à distance de la surface de roulement (2) ;
- le composant quasi-stationnaire (8) est disposé à un point fixe prédéterminé essentiellement décalé parallèlement à la surface de roulement (2) ;
- le composant mobile (7) est fixé à l'unité active (3) de manière à former une liaison de mesure avec le composant quasi-stationnaire (8) lorsqu'elle atteint celle-ci ;
- la commande de position de l'unité active (3) est commandée ou régulée en exploitant le signal de position délivré par le capteur de mesure tant que les deux composants (7, 8) du système de mesure de position sont en liaison de mesure.

2. Entraînement direct planaire selon la revendication 1,
**caractérisé en ce que** le composant quasi-stationnaire (8) est décalé verticalement par rapport à la surface de roulement (2), à l'extérieur de l'espace de mouvement nécessaire aux corps de bobine de l'unité active (3).

3. Entraînement direct planaire selon la revendication 1 ou 2,
**caractérisé en ce que**
le composant quasi-stationnaire (8) est fixé à des éléments de structure et présente une position durablement fixée par rapport à l'unité passive (1).

4. Entraînement direct planaire selon la revendication 1,
**caractérisé en ce que**
le composant quasi-stationnaire (8) est fixé à une deuxième unité active (10) déplaçable par rapport à l'unité passive (1) et par rapport à la première unité active (3) pour s'approcher des points fixes prédéterminés.

5. Entraînement direct planaire selon la revendication 1 ou 2, **caractérisé en ce que** le composant quasi-stationnaire (8) est intégré dans un module fixe (20) dont la position dans le plan de l'unité passive (1) est fixée par au moins un moyen de fixation (21, 23) mécanique fixé à l'unité passive (1), et au moins un aimant de retenue (24) est intégré dans le module fixe (20) et maintient le module fixe sur la surface de roulement (2) de l'unité passive (1).

6. Entraînement direct planaire selon la revendication 5,
**caractérisé en ce que** le moyen de fixation mécanique comprend un rail de butée (23) solidaire de la structure situé sur le bord de l'unité passive (1) et plusieurs tiges de fixation (21) s'engageant dans le rail de butée (23) et le module fixe (20), et l'aimant de retenue (24) comprend un ou plusieurs électro-aimants.

7. Entraînement direct planaire selon l'une quelconque des revendications 1 à 6, **caractérisé en ce que** plusieurs composants quasi-stationnaires (8) sont disposés à plusieurs points fixes écartés les uns des autres.

8. Entraînement direct planaire selon la revendication 7,
**caractérisé en ce que**
les points fixes sont formés par plusieurs modules fixes (20) fixés sur l'unité passive (1).

9. Entraînement direct planaire selon l'une quelconque des revendications 1 à 8,
**caractérisé en ce qu'**
il comprend plusieurs unités actives (3, 10) mobiles sur l'unité passive (1) commune, qui comprennent chacune un composant mobile (7) et/ou un composant quasi-stationnaire (8) .

10. Entraînement direct planaire selon l'une quelconque des revendications 1 à 9,
**caractérisé en ce que**
le composant mobile (7) est décalé verticalement par rapport aux systèmes de bobine de l'unité active (3) dans une zone accessible de l'extérieur.

11. Entraînement direct planaire selon la revendication 10,
**caractérisé en ce que**
le composant mobile (7) est fixé de façon décalée verticalement par rapport à un support de pièce à usiner (11) placé sur l'unité active (3).

12. Entraînement direct planaire selon la revendication 11,
**caractérisé en ce que**
le composant mobile (7) forme une unité de construction avec le support de pièce à usiner (11), qui est reliée de façon interchangeable à l'unité active (3).

13. Entraînement direct planaire selon l'une quelconque des revendications 1 à 12,
**caractérisé en ce que**
l'unité active (3) présente un cadre de maintien (38) parallèle à sa surface de roulement active (36), et dans lequel une plaque de support (41) est positionnée de façon interchangeable, le composant mobile (7) étant disposé dans un plan entre les systèmes de bobine de l'unité active (3) et la plaque de support (41).

14. Entraînement direct planaire selon la revendication 13,
**caractérisé en ce que**
le composant mobile (7) est formé par une mesure matérialisée plane (34) fixée à la face inférieure de la plaque de support (41) .

15. Entraînement direct planaire selon la revendication 14,
**caractérisé en ce que**
la mesure matérialisée (34) est une plaque à grille croisée dont le décalage parallèle par rapport à la surface de roulement active (36) de l'unité active (3) est inférieur à 50 µm.

16. Entraînement direct planaire selon l'une quelconque des revendications 13 à 15,
**caractérisé en ce que**
dans le cadre de maintien (38) et la plaque de support (41), des moyens d'ajustage (42, 43) coopèrent par forces d'attraction magnétiques pour positionner la plaque de support (41) dans une position prédéterminée dans le cadre de maintien (38).

17. Entraînement direct planaire selon la revendication 16,
**caractérisé en ce que**
les moyens d'ajustage sont formés par plusieurs aimants permanents (42) et tiges d'ajustage (43) magnétisables situées en face, qui sont respectivement insérés dans le cadre de maintien ou dans la plaque de support.

18. Entraînement direct planaire selon l'une quelconque des revendications 1 à 17,
**caractérisé en ce que**
le capteur de mesure est un capteur optique ou magnétorésistif.

19. Entraînement direct planaire selon l'une quelconque des revendications 1 à 18,
**caractérisé en ce qu'**
il comprend en outre un système de mesure global à permettant de commander le mouvement de l'unité active (3, 10) tant que les deux composants (7, 8) du système de mesure de position ne sont pas en liaison de mesure.

20. Entraînement direct planaire selon l'une quelconque des revendications 1 à 19,
**caractérisé en ce que**
le mouvement de l'unité active (3, 10) s'effectue en fonctionnement pas à pas tant que les deux composants (7, 8) ne sont pas en liaison de mesure.

21. Entraînement direct planaire selon l'une quelconque des revendications 1 à 20,
**caractérisé en ce que**
l'unité de palier est formée par des paliers d'air.
